# EUROPÄISCHE PATENTSCHRIFT

(11) **EP 0 999 912 B1**
(45) Veröffentlichungstag und Bekanntmachung des Hinweises auf die Patenterteilung: **03.07.2002**
(21) Anmeldenummer: 98945119.0
(22) Anmeldetag: 30.07.1998
(51) Int. Cl.: B23D 31/00

(54) **VORRICHTUNG ZUM BRUCHTRENNEN EINES RINGFÖRMIGEN BAUTEILS**
METHOD FOR FRACTURE-SEPARATING AN ANNULAR PIECE
DISPOSITIF DE SEPARATION PAR RUPTURE D'UNE PIECE ANNULAIRE

(30) Priorität: 01.08.1997 DE 19733387
(43) Veröffentlichungstag der Anmeldung: 17.05.2000
(73) Patentinhaber: Alfing Kessler Sondermaschinen GmbH, 73433 Aalen (DE)
(72) Erfinder: HÄHNEL, Michael, D-73457 Essingen (DE); WISNIEWSKI, Horst, D-72762 Reutlingen (DE)
(74) Vertreter: HOFFMANN - EITLE
(86) Internationale Anmeldenummer: EP9804766
(87) Internationale Veröffentlichungsnummer: WO9906170

(56) Entgegenhaltungen:
- FR-A- 2 526 698
- GB-A- 724 358

## Beschreibung

Die vorliegende Erfindung betrifft eine Vorrichtung zum Bruchtrennen eines ringförmigen Bauteiles, wie beispielsweise eines Pleuels mit einem ortsfesten und einem beweglichen Spreizbacken zum Eingriff in die von dem ringförmigen Bauteil gebildete Bohrung, und mit einer Spreizeinrichtung zum Auseinanderdrücken der Spreizbacken,

Eine Vorrichtung dieser Art ist beispielsweise aus der EP-0 396 797 sowie aus der EP-0 661 125 bekannt. Derartige Vorrichtungen dienen dazu, ein einteiliges, ringförmiges Bauteil, im vorliegenden Fall ein Pleuel, durch Bruchtrennen in zwei Teile, d.h. in eine Kappe und eine Stange zu trennen. Die vorbekannten Vorrichtungen weisen Spreizbacken auf, deren Umfangsfläche an der Innenfläche der Bohrung, d.h. an der Innenfläche des großen Pleuelauges großflächig anliegen. Ein derartiges großflächiges Anliegen der Spreizbacken an der Bohrung wird allgemein für ein gutes Bruchergebnis als erforderlich angesehen.

Die GB-A-724358 offenbart eine Vorrichtung zum Bruchtrennen eines speziellen ringförmigen Bauteils (nämlich eines Lagerringes eines Wälzlagers) an einer einzigen Stelle des Umfangs des Bauteils. Die Vorrichtung besitzt zwei im Querschnitt jeweils im wesentlichen halbkreisförmige, bewegliche Spreizbacken zum Eingriff in eine von dem ringförmigen Bauteil gebildete Bohrung. Die Außenfläche der Spreizbacken liegt gut passend und vorwiegend vollflächig an der Innenfläche der Bohrung an. Zum Aufspreizen ist ein Keil zwischen die beiden Spreizbacken treibbar. Die Umfangsfläche von ausschließlich einer der Spreizbacken, hier die erste Spreizbacke genannt, ist derart ausgebildet, daß ein begrenzter Teilbereich ihres Außenumfangs an der Innenfläche der Bohrung nur über einen örtlich genau definierten Teilflächen- oder Punktbereich in Eingriff gelangt. Dieser Teilflächen- oder Punktbereich ergibt sich (gemessen über die im wesentlichen kreisförmige, gesamte Aussenumfangsfläche beider Spreizbacken) aus einem in der ersten Spreizbacke befindlichen, sich über ca. 90° erstreckenden eingebuchteten Abschnitt, an dem bis auf einen "knopfartigen" Vorsprung kein Kontakt zwischen der Aussenumfangsfläche der ersten Spreizbacke und der Innenfläche der Bohrung besteht. Der verbleibende Abschnitt der ersten Spreizbacke und im wesentlichen die gesamte zweité Spreizbacke liegen über einen Bereich von insgesamt ca. 270° wiederum großflächig an der Innenfläche der Bohrung an. An der Stelle, an welcher der "knopfartige" Vorsprung im wesentlichen nur punktuell an der Innenfläche der Bohrung anliegt, ist eine Bruchkerbe am Außenumfang des ringförmigen Bauteils vorgesehen und bestimmt die Position, an der das Bauteil aufgebrochen wird. Der verbleibende Abschnitt der Aussenumfangsfläche der ersten Spreizbacke sowie im wesentlichen die gesamte Aussenumfangsfläche der zweiten Spreizbacke liegen über einen Winkelbereich von ca. 270° im wesentlichen vollflächig an der Innenfläche der Bohrung an. Bei einem Aufspreizvorgang wird den in dieser Druckschrift gemachten Angaben zufolge das ringförmige Bauteil zunächst an seinem gesamten Umfang unter Spannung gesetzt. Beim weiteren Aufspreizen der Spreizbacken wird in den in der Nähe des Vorsprungs befindlichen Abschnitten eine leichte Biegung in dem Bauteil erzeugt. Aufgrund dieser kombinierten Belastung aus (Normal-)Spannung und Biegespannung wird das ringförmige Bauteil durch die einzige Bruchkerbe hindurch an einer einzelnen Stelle aufgetrennt, so daß es gewissermaßen eine C-förmige Gestalt mit zwei gegenüberliegenden Bruchenden aufweist.

Der vorliegenden Erfindung liegt die Aufgabe zugrunde, eine Vorrichtung zum Bruchtrennen eines ringförmigen Bauteils zu schaffen, mit der das Bruchverhalten noch gezielter insbesondere an kritischen Bauteilstellen beeinflußbar ist und mit der auch beim Bruchtrennen von Bauteilen aus Werkstoffen mit ungleichmäßiger Härte oder extrem hoher Festigkeit ein besseres Endergebnis erzielt wird; ferner soll mit dieser Vorrichtung der bei konventionellen Vorrichtungen häufig auftretende "Einzieheffekt" wirkungsvoll vermieden werden.

Diese Aufgabe wird gelöst durch eine erfindungsgemäße Vorrichtung mit den Merkmalen der unabhängigen Ansprüche 1 oder 2.

Weitere vorteilhafte Ausgestaltungsmerkmale der erfindungsgemäßen Vorrichtung sind Gegenstand der beiliegenden Unteransprüche.

Versuche haben gezeigt, daß sich die besten Bruchergebnisse überraschenderweise nicht in allen Fällen mit einem großflächigen Anliegen der Umfangsfläche der Spreizbacken an der Innenfläche der Bohrung erzielen lassen. Vielmehr kann es abhängig vom Material des ringförmigen Bauteiles und dessen Bruchverhalten sowie in Abhängigkeit anderer Parameter, wie der Geometrie der Bruchfläche vorteilhaft sein, die Bruchkraft lediglich in einem bestimmten Teilflächenbereich oder auch linienförmig in das Bauteil einzuleiten.

So kann es zweckmäßig sein, die auf Teilflächen begrenzte oder die linienförmige Brechkrafteinleitung lediglich in Achsrichtung der Bohrung oder gegebenenfalls in Umfangsrichtung der Bohrung vorzunehmen. Für besondere Fälle kann auch eine Einleitung in Achs- und in Umfangsrichtung vorteilhaft sein.

Die Versuche haben gezeigt, daß mit einer derartigen Ausgestaltung überraschenderweise die bei bekannten Vorrichtungen häufig auftretenden Doppelrisse, Abbrüche und Absätze vermieden werden können. Diese entstehen, wenn sich innerhalb der Bruchfläche Störbereiche, wie Bohrungen, Öffnungen oder dergleichen befinden. So besitzen beispielsweise Pleuel im Bereich der Bruchfläche zwei Bohrungen für Schrauben, mit denen nach erfolgtem Trennvorgang Kappe und Stange zusammengehalten werden. Wird der Brechvorgang eingeleitet, so fließt der Bruch von der bei der Herstellung des Pleuels vorgesehenen Sollbruchstelle im Bereich der Innenfläche der Bohrung um die Schraubenbohrungen seitlich herum nach außen. Hinter den Schraubenbohrungen vereinigen sich die Bruchflächen wieder. Da sich die Bruchflächen jedoch beiderseitig der Schraubenbohrungen nicht zwangsläufig auf derselben Ebene ausbreiten, kann es bei der Vereinigung der Bruchflächen zu Doppelrissen, Ausbrüchen oder Absetzen kommen. Derartige Doppelrisse, Ausbrüche und Absätze müssen jedoch vermieden werden.

Grundsätzlich kann der Teilflächen- oder Linienbereich, über den die Bruchkraft eingeleitet wird, in verschiedenster Weise gestaltet sein. Die spezielle Ausbildung und die örtliche Plazierung kann jeweils durch Versuche festgelegt bzw. optimiert werden.

So kann die Umfangsfläche der Spreizbacken - in Achsrichtung der Bohrung betrachtet - beispielsweise ballig oder auch konisch sein. Auch kann der Radius der Spreizbacken zur Kompensierung von sogenannten Einzieheffekten beim Bruchvorgang größer gewählt werden als der Radius der Bohrung des ringförmigen Bauteiles.

Für besondere Anwendungsfälle kann es zweckmäßig sein, an der Umfangsfläche der Spreizbacken ein elastisches Material anzuordnen. Dieses elastische Material kann sich über die gesamte Umfangsfläche, vorteilhafterweise jedoch auch nur bereichsweise, erstrecken. Versuche haben ergeben, daß - je nach Anwendungsbereich - das elastische Material eine Härte von 50 bis 95 Shore A aufweisen kann.

Für besondere Anwendungszwecke kann es vorteilhaft sein, das elastische Material in Form einer Hülse auszubilden. Diese Hülse kann, bezogen auf die Innenfläche der Bohrung, beispielsweise mittig angeordnet sein.

Durch die Anordnung von elastischem Material können Spannungsspitzen vermieden werden, die zu einer unkontrollierten Bruchausbreitung führen. Auch eignet sich die Anordnung von elastischem Material besonders in solchen Fällen, bei denen die Bohrung des ringförmigen Bauteiles im unbearbeiteten Zustand gebrochen werden soll.

Für spezielle Anwendungsfälle kann das elastische Material auch in Form von elastischen Segmenten an der Umfangsfläche der Spreizbacken angeordnet sein.

Bei einer Vorrichtung mit den Merkmalen des Oberbegriffes des Patentanspruches 1 kann die Spreizeinrichtung auch derart gestaltet sein, daß jeder Spreizbacken zweiteilig ausgebildet ist und jeweils einen Spreizbackenkern und eine Spreizbackenschale aufweist, wobei die Außenfläche der Spreizbackenschale mit der Innenfläche der Bohrung des ringförmigen Bauteiles in Eingriff gelangt.

Bei einer derartigen Ausgestaltung, für die selbständig Schutz begehrt wird, kann die Außenfläche der Spreizbackenschale sowohl zylindrisch als auch gemäß dem Kennzeichen des Patentanspruchs 1 oder gemäß den Patentansprüchen 2 bis 13 ausgestaltet sein.

Der Vorteil einer Spreizbackenausbildung aus Spreizbackenkern und Spreizbackenschale besteht darin, daß die Vorrichtung auf einfache Weise auf ringförmige Bauteile unterschiedlicher Gestalt und Abmessungen angepaßt werden kann. Zum Zweck der Anpassung muß lediglich die Spreizbackenschale ausgewechselt werden, was auf einfache Weise möglich ist. Der Spreizbackenkern einschließlich Spreizeinrichtung kann dagegen unverändert bleiben.

Durch die erfindungsgemäße Ausgestaltung ist es darüber hinaus möglich, auch das Bruchverhalten auf einfache Weise durch Austauschen der Spreizbackenschale zu beeinflussen. So kann bei gleichbleibendem, ringförmigen Bauteil zur Erzielung eines gewünschten Bruchergebnisses im Bedarfsfall eine Spreizbackenschale mit anders geformter Außenfläche eingewechselt werden und dieser Vorgang solange wiederholt werden, bis das gewünschte, optimale Bruchergebnis erzielt ist.

Spreizbackenschalen lassen sich in verschiedenster Weise herstellen. Eine besonders einfache und kostengünstig herzustellende Ausführungsform wird erreicht, wenn die jeweilige Spreizbackenschale als gedrehtes Bauteil gefertigt wird, das in einem anschließenden Arbeitsgang in zwei oder mehrere Ringsegmente unterteilt wird.

Grundsätzlich kann die Spreizbackenschale bzw. deren Ringsegmente in verschiedenster Weise auf dem Spreizbackenkern befestigt werden. Vorteilhaft ist es jedoch, wenn jede Spreizbackenschale an ihrem einen Rand einen Flansch aufweist, der zur Aufnahme der Haltemittel, wie Befestigungsschrauben, Schnellverschlüsse oder dergleichen, eingerichtet ist.

Wie oben dargelegt, eröffnet die vorliegende Erfindung die Möglichkeit, die Brechkraft derart in das ringförmige Bauteil einzuleiten, daß sich ein definierter Bruchbeginn und ein definierter Bruchverlauf ergibt. Mit den Maßnahmen der vorliegenden Erfindung ist es somit möglich, das Bruchverhalten präzise zu beeinflussen. Dabei kann mit den unterschiedlichen Spreizbackengeometrien der vorliegenden Erfindung das Bruchverhalten sowohl bei unbearbeiteten als auch bei vorbearbeiteten oder fertigbearbeiteten Bohrungen des ringförmigen Bauteiles beeinflußt werden.

Im folgenden sind zur weiteren Erläuterung und zum besseren Verständnis Ausführungsformen der Erfindung unter Bezugnahme auf die beigefügten Zeichnungen näher beschrieben und erläutert.
- Fig. 1: zeigt schematisch eine Draufsicht auf die wesentlichen Bestandteile eines ersten Ausführungsbeispiels der erfindungsgemäßen Vorrichtung,
- Fig. 2: zeigt schematisch einen Längsschnitt entlang der Linie I-I gemäß Fig. 1,
- Fig. 3: zeigt schematisch einen Längsschnitt entlang der Linie I-I gemäß Fig. 1 für ein zweites Ausführungsbeispiel der vorliegenden Erfindung,
- Fig. 4: zeigt schematisch eine vergrößerte Draufsicht auf den Bereich der Spreizbacken eines dritten Ausführungsbeispiels der vorliegenden Erfindung,
- Fig. 5: zeigt schematisch einen Längsschnitt entlang der Linie I-I gemäß Fig. 1 für ein viertes Ausführungsbeispiel der vorliegenden Erfindung,
- Fig. 6: zeigt einen Längsschnitt durch eine Spreizbackenschale vor dem Auftrennen in Ringsegmente, und
- Fig. 7: zeigt eine Draufsicht auf die in Fig. 6 gezeigte Spreizbackenschale.

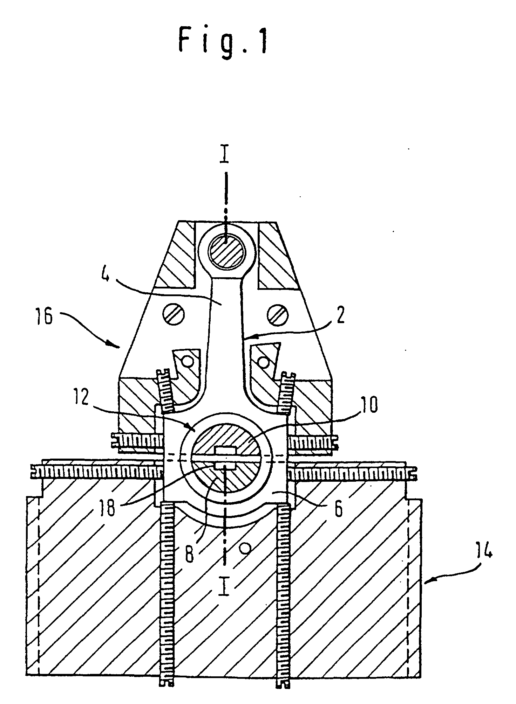

Bei dem in Fig. 1 gezeigten Ausführungsbeispiel ist ein ringförmiges Bauteil in Form eines Pleuels 2 dargestellt, der in der Vorrichtung in eine Stange 4 und einen Deckel 6 gebrochen werden soll. Die Einzelheiten der gezeigten Vorrichtung sind in der EP-0 396 797 beschrieben.

Wesentlich für das Trennen von Stange 4 und Deckel 6 des Pleuels 2 ist der Eingriff einer beweglichen Spreizbacke 8 und einer ortsfesten Spreizbacke 10 in eine von dem Deckel 6 und der Stange 4 gebildete Bohrung in Form eines zylindrischen Pleuelauges 12. Die bewegliche Spreizbacke 8 ist an einem beweglichen Vorrichtungsteil 14 und die ortsfeste Spreizbacke 10 an einem ortsfesten Vorrichtungsteil 16 befestigt. Zum Trennen von Stange 4 und Deckel 6 werden die beiden Vorrichtungsteile 14, 16 ruckartig auseinandergetrieben, beispielsweise durch eine auf das bewegliche Vorrichtungsteil 16 auftreffende Schlagmasse. Alternativ kann die Trennung auch durch einen nicht dargestellten Spreizkeil erfolgen, der in eine Ausnehmung 18, die in der Mitte der beiden Spreizbacken 8, 10 in axialer Richtung verlaufend ausgebildet ist, eingreift und ruckartig eingetrieben wird.

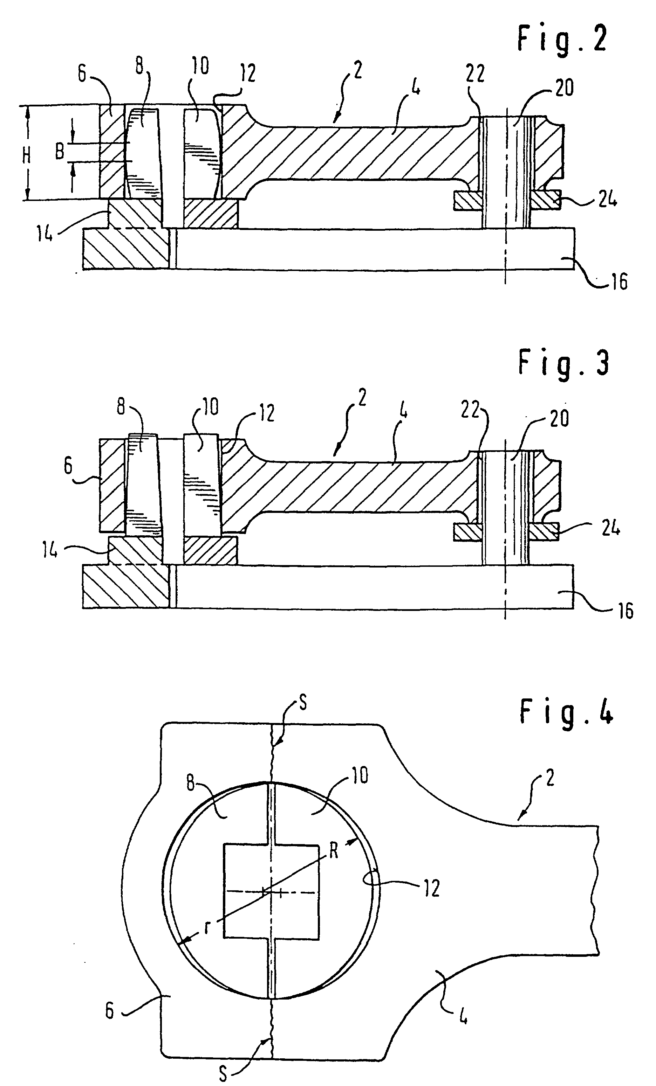

Die beiden Spreizbacken 8, 10 weisen bei dem in den Fig. 1 und 2 dargestellten Ausführungsbeispiel im wesentlichen eine halbkreisförmige Querschnittsfläche auf. Wie der Darstellung gemäß Fig. 2 zu entnehmen ist, die einen Längsschnitt entlang der Linie I-I gemäß der Darstellung in Fig. 1 zeigt, sind die Spreizbacken 8, 10 des ersten gezeigten Ausführungsbeispiels ballig ausgebildet. Dabei ist der größte Radius der halbkreisförmigen Spreizbacken 8, 10 in der Mitte des Pleuelauges 12 angeordnet.

Bei dem gezeigten Ausführungsbeispiel erstreckt sich der Bereich des maximalen Radius über eine Breite B von etwa 10% der axialen Höhe H des Pleuelauges 12. Dadurch wird die Spreizkraft in einem genau definierten mittleren Bereich des Pleuelauges 12 eingeleitet. Diese Ausgestaltung eignet sich besonders für Werkstoffe mit ungleichmäßiger Härte, bei denen die Gefahr besteht, daß eine partiell hohe Härte zu einem nicht vorhersehbaren Bruchbeginn führt.

In Fig. 3 ist schematisch eine weitere Ausführungsform der vorliegenden Erfindung in einem Längsschnitt gezeigt, die der Schnittlinie I-I gemäß der Darstellung in Fig. 1 entspricht.

Auch die Spreizbacken 8, 10 dieser Ausführungsform weisen eine im wesentlichen halbkreisförmige Querschnittsfläche auf. Die Spreizbacken 8, 10 gemäß dem zweiten Ausführungsbeispiel sind jedoch konisch ausgebildet. Dort, wo der Durchmesser des Pleuelauges 12 etwa dem Außendurchmesser der beiden Spreizbacken 8, 10 entspricht, liegt das Pleuel 2 im Bereich des Pleuelauges 12 an den Spreizbacken 8, 10 an. Ein zylindrisches Halteelement 20, das an dem ortsfesten Vorrichtungsteil 16 angeordnet ist, ragt in eine Kolbenbolzenbohrung 22 hinein. Zwischen dem Pleuel 2 und dem Vorrichtungsteil 16 ist eine in Längsrichtung des Halteelementes 20 verschiebbare Auflage 24 angeordnet. Durch diese Anordnung ist es möglich, das Pleuel 2 derart abzustützen, daß die Achsen des Pleuelauges und der Kolbenbolzenbohrung genau rechtwinklig zur Bewegung des beweglichen Vorrichtungsteiles 14 beim Trennen von Stange 4 und Deckel 6 liegen. Eine derartige Lage ist wesentlich für ein gutes Bruchergebnis. Durch die Höhenverstellbarkeit der Auflage 24 ist es möglich, diese Lage auch dann zu gewährleisten, wenn die Bundflächen des großen und des kleinen Pleuelauges nicht in einer Ebene liegen.

Aufgrund der Halterung des Pleuels 2 liegen die konischen Spreizbacken 8, 10 und das Pleuelauge 12 konzentrisch zueinander. Es ergibt sich eine linienförmige Krafteinleitung an einem äußeren Rand des Pleuelauges 12.

Werden die beiden Spreizbacken 8, 10 zum Trennen von Stange 4 und Deckel 6 auseinandergetrieben, so breitet sich der Bruch von dem äußeren Rand im wesentlichen entlang der Achse des Pleuelauges 12 aus. Aufgrund der Krafteinleitung entlang einer sehr dünnen Linie am Rand des Pleuelauges eignet sich die gezeigte Ausführungsform insbesondere für solche Pleuel, die aus einem sehr festen Werkstoff hergestellt sind. Aber auch Pleuel, die aus einem weniger festen Werkstoff hergestellt sind, können mittels des gezeigten Ausführungsbeispiels getrennt werden. Um zu vermeiden, daß die Umfangsfläche des Pleuelauges dabei verformt wird, kann das Pleuel am äußeren Rand mit einer Phase ausgestattet sein.

In Fig. 4 ist ein weiteres Ausführungsbeispiel der vorliegenden Erfindung gezeigt. Auch bei diesem Ausführungsbeispiel weisen die Spreizbacken 8, 10 eine im wesentlichen halbkreisförmige Querschnittsfläche auf, wobei die Spreizbacken 8, 10 im Gegensatz zu den voranstehend beschriebenen Spreizbacken 8, 10 zylindrisch ausgebildet sind. Dementsprechend weisen die Spreizbacken 8, 10 über die gesamte Längsrichtung einen konstanten Radius auf.

Bei dem in Fig. 4 gezeigten Ausführungsbeispiel ist jedoch der Radius R der Spreizbacken 8, 10 größer als der Radius r des Pleuelauges 12. Dadurch ergibt sich für die Spreizbacken im zusammengefahrenen Zustand eine etwa elliptische Querschnittsform.

Aufgrund der elliptischen Querschnittsform wird beim Brechvorgang die Brechkraft zuerst im Bereich der Sollbruchstellen S in den Pleuel eingeleitet. Auf diese Weise wird das große Pleuelauge beim Brechvorgang quer zur Pleuellängsrichtung "aufgeweitet". Dieser "Aufweitvorgang" wirkt dem beim Brechen von Pleuel häufig beobachteten "Einzieheffekt" entgegen, der durch freiwerdende Spannungen erzeugt wird.

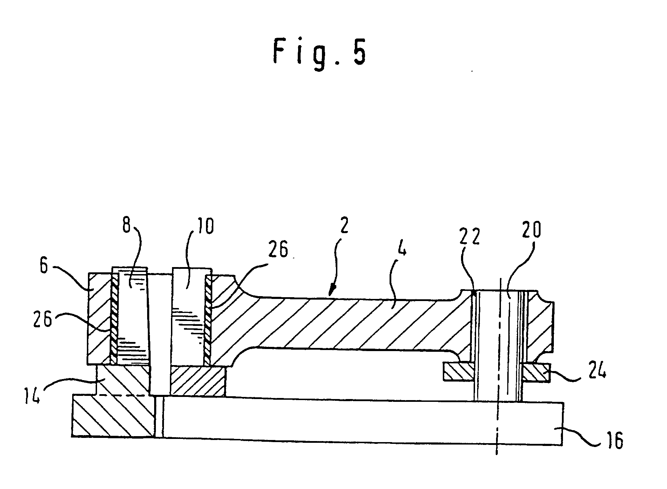

In Fig. 5 ist schließlich ein viertes Ausführungsbeispiel der vorliegenden Erfindung gezeigt, bei dem an der Umfangsfläche der Spreizbacken 8, 10 ein elastisches Material 26 beispielsweise durch Kleben oder Auftragen befestigt ist. Die Anordnung des elastischen Materials 26 verhindert, daß beim Brechen von Pleueln mit unbearbeitetem großen Pleuelauge oder gegebenenfalls auch bei Verschmutzungen beim Brechvorgang Spannungsspitzen auftreten. Das die beiden Spreizbacken 8, 10 umgebende elastische Material 26 hat den weiteren Vorteil, daß die auseinandergetriebenen Vorrichtungsteile 14, 16 zusätzlich gedämpft werden.

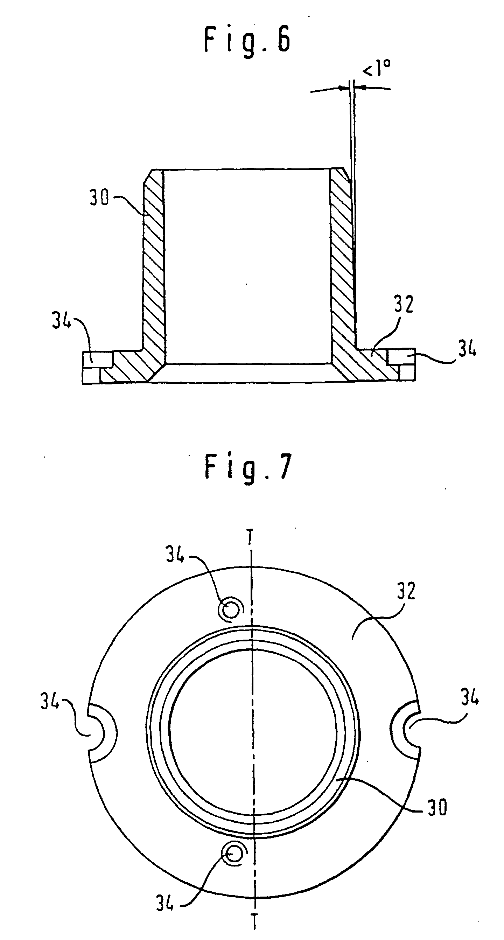

Fig. 6 zeigt einen Längsschnitt durch einen Vorformling für eine Spreizbackenschale. Der noch nicht aufgetrennte Vorformling weist ein Schalensegment 30 und ein Flanschsegment 32 auf. Das Schalensegment 30 weist eine kreisrunde, zylindrische Innenfläche auf, deren Radius dem Radius eines entsprechenden Spreizbackenkerns entspricht. Die Außenfläche des Schalensegments 30 ist im vorliegenden Ausführungsbeispiel um einen Winkel, der in der Regel weniger als 1° beträgt, konisch ausgebildet. Darüber hinaus ist die obere Stirnseite angefast, um ein einfaches Aufschieben des Pleuelauges auf die Spreizbacken zu ermöglichen.

Zur Herstellung der Ringsegmente wird die Spreizbackenschale entlang der Linie T-T aufgetrennt. Es ergeben sich zwei identische Schalenhälften. Zur Befestigung und Zentrierung der Schalenhälften an dem beweglichen Vorrichtungsteil 14 bzw. dem ortsfesten Vorrichtungsteil 16 sind Bohrungen bzw. Halbbohrungen 34 an dem Flanschsegment 32 ausgebildet.

Aufgrund dieser Ausgestaltung kann die Vorrichtung auf einfache Weise zum Brechen von Pleueln unterschiedlicher Gestalt und unterschiedlicher Abmessungen umgerüstet werden. Zu diesem Zweck müssen lediglich die Ringsegmente bzw. die Schalenhälften demontiert und durch solche anderer Abmessungen ersetzt werden. Der Spreizbackenkern mit allen Elementen der Spreizeinrichtung muß auf diese Weise nicht umgerüstet bzw. verändert werden.

Durch den Einsatz von Spreizbackenschalen kann darüber hinaus im Bedarfsfall auf einfache Weise das Bruchverhalten beeinflußt werden. Zur Erzielung des jeweiligen Bruchergebnisses ist es lediglich erforderlich, Ringsegmente bzw. Schalenhälften einzusetzen, die die für das gewünschte Bruchergebnis zweckmäßigste Außenfläche aufweisen.

## Patentansprüche

1. Vorrichtung zum Bruchtrennen eines ringförmigen Bauteiles, wie beispielsweise eines Pleuels (2),
- mit einem ortsfesten und einem beweglichen Spreizbacken (8, 10) zum Eingriff in die von dem ringförmigen Bauteil gebildete Bohrung,
- wobei die Umfangsfläche der Spreizbacken (8, 10) derart ausgebildet ist, daß die Spreizbacken (8, 10) an der Innenfläche der Bohrung (12) lediglich über einen örtlich genau definierten Teilflächenoder Linienbereich in Eingriff gelangen, und wobei der Teilflächen- oder Linienbereich in Umfangsrichtung der Bohrung (12) verläuft, und
- mit einer Spreizeinrichtung zum Auseinanderdrücken der Spreizbacken (8, 10).

2. Vorrichtung zum Bruchtrennen eines ringförmigen Bauteiles, wie beispielsweise eines Pleuels (2),
- mit einem ortsfesten (10) und einem beweglichen Spreizbacken (8) zum Eingriff in die von dem ringförmigen Bauteil gebildete Bohrung (12),
- wobei die Umfangsfläche der Spreizbacken (8, 10) derart ausgebildet ist, daß die Spreizbacken (8, 10) an der Innenfläche der Bohrung (12) lediglich über einen örtlich genau definierten Teilflächenoder Linienbereich in Eingriff gelangen, und wobei dieser Teilflächen- oder Linienbereich in Achsrichtung der Bohrung (12) verläuft, und wobei der Radius (R) der Spreizbacken (8, 10) größer als der Radius (r) der Bohrung (12) ist, und
- mit einer Spreizeinrichtung zum Auseinanderdrücken der Spreizbacken (8, 10).

3. Vorrichtung nach Anspruch 1 oder 2,
**dadurch gekennzeichnet, daß**
die Spreizbacken (8, 10) eine im wesentlichen halbkreisförmige Querschnittsfläche aufweisen.

4. Vorrichtung nach Anspruch 1 oder 2,
**dadurch gekennzeichnet, daß**
der Teilflächen- oder Linienbereich in Achs- und in Umfangsrichtung der Bohrung (12) verläuft.

5. Vorrichtung nach einem der Ansprüche 1 bis 4,
**dadurch gekennzeichnet, daß**
die Spreizbacken (8, 10) in einem zusammengefahrenen Zustand eine im wesentlichen elliptische Querschnittsform aufweisen.

6. Vorrichtung nach Anspruch 5,
**dadurch gekennzeichnet, daß**
die lange Achse der elliptische Querschnittsform der Spreizbacken (8, 10) im zusammengefahrenen Zustand quer zur Längsrichtung des Pleuels (2) verläuft und der örtlich genau definierte, in Achsrichtung der Bohrung (12) verlaufende Teilflächen- oder Linienbereich im wesentlichen auf einer quer zur Längsrichtung des Pleuels (2) verlaufenden und durch zwei einander gegenüberliegende Sollbruchstellen (S) definierten Sollbruchebene (SE) liegt, so daß bei einem Brechvorgang eine Brechkraft zuerst im Bereich der Sollbruchstellen (S) in den Pleuel (2) eingeleitet und die Bohrung (12) quer zur Längsrichtung des Pleuels (2) aufgeweitet wird.

7. Vorrichtung nach Anspruch 1, 3, 4 oder 5,
**dadurch gekennzeichnet, daß**
die Umfangsflächen der Spreizbacken (8, 10), in Achsrichtung der Bohrung (12) betrachtet, ballig ausgebildet sind.

8. Vorrichtung nach Anspruch 1, 3, 4 oder 5,
**dadurch gekennzeichnet, daß**
die Umfangsflächen der Spreizbacken (8, 10), in Achsrichtung der Bohrung (12) betrachtet, konisch ausgebildet sind.

9. Vorrichtung nach Anspruch 1, 3, 4, 5, 7 oder 8,
**dadurch gekennzeichnet, daß**
der Radius (R) der Spreizbacken (8, 10) größer als der Radius (r) der Bohrung (12) ist.

10. Vorrichtung nach Anspruch 1, 3, 4, 5, 7, 8 oder 9,
**dadurch gekennzeichnet, daß**
an der Umfangsfläche der Spreizbacken (8, 10) ein elastisches Material angeordnet ist.

11. Vorrichtung nach Anspruch 10,
**dadurch gekennzeichnet, daß**
das elastische Material Gummi ist.

12. Vorrichtung nach Anspruch 10 oder 11,
**dadurch gekennzeichnet, daß**
das elastische Material eine Härte von 50 bis 95 Shore A aufweist.

13. Vorrichtung nach Anspruch 10, 11 oder 12,
**dadurch gekennzeichnet, daß**
das elastische Material eine Hülse bildet, deren Länge kleiner ist als die Länge der Bohrung.

14. Vorrichtung nach Anspruch 13,
**dadurch gekennzeichnet, daß**
die Hülse, bezogen auf die Innenfläche der Bohrung, mittig angeordnet ist.

15. Vorrichtung nach einem oder mehreren der vorhergehenden Ansprüche 1 bis 14,
**dadurch gekennzeichnet, daß**
jeder Spreizbacken zweiteilig ausgebildet ist und
jeweils einen Spreizbackenkern und eine Spreizbackenschale (30, 32) aufweist, wobei die Außenfläche der Spreizbackenschale mit der Innenfläche der Bohrung (12) in Eingriff gelangt.

16. Vorrichtung nach Anspruch 15,
**dadurch gekennzeichnet, daß**
die Spreizbackenschale (30, 32) lösbar mit dem Spreizbackenkern verbunden ist.

17. Vorrichtung nach einem der Ansprüche 15 oder 16,
**dadurch gekennzeichnet, daß**
die Spreizbackenschalen (30, 32) aus einem in Ringsegmente unterteilten, gedrehten Bauteil gefertigt sind.

18. Vorrichtung nach einem der Ansprüche 15 bis 17,
**dadurch gekennzeichnet, daß**
jede Spreizbackenschale an ihrem einen Rand einen Flansch (32) aufweist.

19. Vorrichtung nach Anspruch 18,
**dadurch gekennzeichnet, daß**
an dem Flansch (32) Bohrungen oder Halbbohrungen (34) zum Befestigen und Zentrieren der Schalenhälften an einem beweglichen Teil (14) der Vorrichtung oder an einem ortsfesten Teil (16) der Vorrichtung ausgebildet sind.

## Claims

1. Apparatus for fracture separation of an annular component, for example a connecting rod (2),
- with one stationary and one movable expansion jaw (8, 10) for engagement in the bore formed by the annular component,
- wherein the circumferential surface of the expansion jaws (8, 10) is designed in such a way that the expansion jaws (8, 10) become engaged at the inner surface of the bore (12) only over a partial area or line region which is precisely defined in position, and wherein the partial area or line region runs in the circumferential direction of the bore (12), and
- with an expansion device for forcing the expansion jaws (8, 10) apart.

2. Apparatus for fracture separation of an annular component, for example a connecting rod (2),
- with one stationary (10) and one movable (8) expansion jaw for engagement in the bore (12) formed by the annular component,
- wherein the circumferential surface of the expansion jaws (8, 10) is designed in such a way that the expansion jaws (8, 10) become engaged at the inner surface of the bore (12) only over a partial area or line region which is precisely defined in position, and wherein this partial area or line region runs in the axial direction of the bore (12), and wherein the radius (R) of the expansion jaws (8, 10) is greater than the radius (r) of the bore (12), and
- with an expansion device for forcing the expansion jaws (8, 10) apart.

3. Apparatus according to claim 1 or 2, **characterised in that** the expansion jaws (8, 10) have an essentially semicircular cross-sectional area.

4. Apparatus according to claim 1 or 2, **characterised in that** the partial area or line region runs in the axial and in the circumferential direction of the bore (12).

5. Apparatus according to any of claims 1 to 4, **characterised in that** the expansion jaws (8, 10) in a collision state have an essentially elliptical cross-sectional shape.

6. Apparatus according to claim 5, **characterised in that** the major axis of the elliptical cross-sectional shape of the expansion jaws (8, 10) in the collision state runs transversely to the longitudinal direction of the connecting rod (2), and the partial area or line region which is precisely defined in position and runs in the axial direction of the bore (12) lies essentially in a predetermined fracture plane (SE) which runs transversely to the longitudinal direction of the connecting rod (2) and is defined by two mutually opposed predetermined fracture points (S), so that, in a fracture operation, a breaking force is first applied to the connecting rod (2) in the region of the predetermined fracture points (S) and the bore (12) is expanded transversely to the longitudinal direction of the connecting rod (2).

7. Apparatus according to claim 1, 3, 4 or 5, **characterised in that** the circumferential surfaces of the expansion jaws (8, 10), seen in the axial direction of the bore (12), are crowned.

8. Apparatus according to claim 1, 3, 4 or 5, **characterised in that** the circumferential surfaces of the expansion jaws (8, 10), seen in the axial direction of the bore (12), are conical.

9. Apparatus according to claim 1, 3, 4, 5, 7 or 8, **characterised in that** the radius (R) of the expansion jaws (8, 10) is greater than the radius (r) of the bore (12).

10. Apparatus according to claim 1, 3, 4, 5, 7, 8 or 9, **characterised in that** on the circumferential surface of the expansion jaws (8, 10) is arranged a resilient material.

11. Apparatus according to claim 10, **characterised in that** the resilient material is rubber.

12. Apparatus according to claim 10 or 11, **characterised in that** the resilient material has a Shore A hardness from 50 to 95.

13. Apparatus according to claim 10, 11 or 12, **characterised in that** the resilient material forms a sleeve whose length is shorter than the length of the bore.

14. Apparatus according to claim 13, **characterised in that** the sleeve, referred to the inner surface of the bore, is arranged centrally.

15. Apparatus according to one or more of the preceding claims 1 to 14, **characterised in that** each expansion jaw is constructed in two parts and in each case comprises an expansion jaw core and an expansion jaw shell (30, 32), wherein the outer surface of the expansion jaw shell becomes engaged with the inner surface of the bore (12).

16. Apparatus according to claim 15, **characterised in that** the expansion jaw shell (30, 32) is releasably connected to the expansion jaw core.

17. Apparatus according to either of claims 15 or 16, **characterised in that** the expansion jaw shells (30, 32) are manufactured from a turned component divided into ring segments.

18. Apparatus according to any of claims 15 to 17, **characterised in that** each expansion jaw shell comprises a flange (32) at one edge.

19. Apparatus according to claim 18, **characterised in that** on the flange (32) are formed bores or half-bores (34) for attachment and centring of the shell halves on a movable portion (14) of the apparatus or on a stationary portion (16) of the apparatus.

## Revendications

1. Dispositif de séparation par rupture d'une pièce de forme annulaire, comme par exemple une bielle (2), comportant
- une mâchoire d'écartement fixe et une mâchoire d'écartement mobile (8, 10) destinée à s'engager dans la perçage formé par le composant de forme annulaire,
- la surface circonférentielle des mâchoires d'écartement (8, 10) étant agencée de telle sorte que les mâchoires d'écartement (8, 10) s'engagent contre la surface intérieure du perçage (12) uniquement sur une zone de surface partielle ou une zone linéaire, définie localement de façon précise, et la zone de surface partielle ou la zone linéaire s'étendant dans la direction périphérique du perçage (12), et
- un dispositif d'écartement servant à écarter les mâchoires d'écartement (8, 10).

2. Dispositif de séparation par rupture d'un composant de forme annulaire, comme par exemple une bielle (2), comportant
- une mâchoire d'écartement fixe (10) et une mâchoire d'écartement mobile (8) destinée à s'engager dans le perçage (12) formé par le composant de forme annulaire,
- la surface circonférentielle des mâchoires d'écartement (8, 10) étant agencée de telle sorte que les mâchoires d'écartement (8, 10) s'engagent contre la surface intérieure du perçage (12) uniquement dans une zone de surface partielle ou une zone linéaire, définie localement de façon précise, et la zone de surface partielle ou la zone linéaire s'étendant dans la direction axiale du perçage (12), et le rayon (R) des mâchoires d'écartement (8, 10) étant supérieur au rayon (r) du perçage (12), et
- un dispositif d'écartement pour écarter les mâchoires d'écartement (8, 10).

3. Dispositif selon la revendication 1 ou 2, **caractérisé en ce que** les mâchoires d'écartement (8, 10) possèdent une surface en coupe transversale de forme essentiellement semi-circulaire.

4. Dispositif selon la revendication 1 ou 2, **caractérisé en ce que** la zone de surface partielle ou la zone linéaire s'étend dans la direction axiale et dans la direction circonférentielle du perçage (12).

5. Dispositif selon l'une des revendications 1 à 4, **caractérisé en ce que** les mâchoires d'écartement (8, 10) comportent, dans un état serré, une forme essentiellement elliptique en coupe transversale.

6. Dispositif selon la revendication 5, **caractérisé en ce que** le grand axe de la forme elliptique en coupe transversale des mâchoires d'écartement (8, 10) s'étend, à l'état serré, transversalement par rapport à la direction longitudinale de la bielle (2) et la zone de surface partielle ou zone linéaire, qui est définie localement de façon précise et s'étend dans la direction axiale du perçage (12), est située essentiellement dans un plan de rupture de consigne (SE) qui s'étend transversalement par rapport à la direction longitudinale de la bielle (2) et est défini par deux points de rupture de consigne (S) situés à l'opposé l'un de l'autre, de sorte que lors d'un processus de rupture, une force de rupture est appliquée tout d'abord dans la zone des points de rupture (S) dans la bielle (2), et le perçage (12) est élargi transversalement par rapport à la direction longitudinale de la bielle (2).

7. Dispositif selon la revendication 1, 3, 4 ou 5, **caractérisé en ce que** les surfaces circonférentielles des mâchoires d'écartement (8, 10) sont agencées avec une forme bombée, lorsqu'on regarde dans la direction axiale du perçage (12).

8. Dispositif selon la revendication 1, 3, 4 ou 5, **caractérisé en ce que** les surfaces circonférentielles des mâchoires d'écartement (8, 10) sont réalisées avec une forme conique lorsqu'on regarde dans la direction axiale du perçage (12).

9. Dispositif selon les revendications 1, 3, 4, 5, 7 ou 8, **caractérisé en ce que** le rayon (R) des mâchoires d'écartement (8, 10) est supérieur au rayon (r) du perçage (12).

10. Dispositif selon la revendication 1, 3, 4, 5, 7, 8 ou 9, **caractérisé en ce qu'**un matériau élastique est disposé sur la surface circonférentielle des mâchoires d'écartement (8, 10).

11. Dispositif selon la revendication 10, **caractérisé en ce que** le matériau élastique est du caoutchouc.

12. Dispositif selon la revendication 10 ou 11, **caractérisé en ce que** le matériau élastique possède une dureté comprise entre 50 et 95 Shore A.

13. Dispositif selon la revendication 10, 11 ou 12, **caractérisé en ce que** le matériau élastique forme une douille, dont la longueur est inférieure à la longueur du perçage.

14. Dispositif selon la revendication 13, **caractérisé en ce que** la douille est disposée d'une manière centrée par rapport à la surface intérieure du perçage.

15. Dispositif selon une ou plusieurs des revendications précédentes 1 à 14, **caractérisé en ce que** chaque mâchoire d'écartement est réalisée en deux éléments et possède respectivement un noyau de mâchoire d'écartement et une coque de mâchoire d'écartement (30, 32), la surface extérieure de la coque des mâchoires d'écartement venant en prise avec la surface intérieure du perçage (12).

16. Dispositif selon la revendication 15, **caractérisé en ce que** la coque (30, 32) des mâchoires d'écartement est reliée de façon amovible au noyau des mâchoires d'écartement.

17. Dispositif selon l'une des revendications 15 ou 16, **caractérisé en ce que** les mâchoires des coques (30, 32) des mâchoires d'écartement sont formées par un composant pivoté, qui est logé dans des segments annulaires.

18. Dispositif selon l'une des revendications 15 à 17, **caractérisé en ce que** chaque coque de mâchoire d'écartement comporte, sur l'un de ses bords, une bride (32).

19. Dispositif selon la revendication 18, **caractérisé en ce que** sur la bride (32) sont formés des perçages ou des demi-perçages (34) servant à fixer et centrer les moitiés de coque sur une partie mobile (14) du dispositif ou sur une partie fixe (16) du dispositif.
